# EUROPÄISCHE PATENTANMELDUNG

(11) **EP 1 500 554 A1**
(43) Veröffentlichungstag der Anmeldung: **26.01.2005**
(21) Anmeldenummer: 04010063.8
(22) Anmeldetag: 28.04.2004
(51) Int. Cl.: B60Q 1/14, B60Q 1/00

(54) **Sensoreinrichtung zum automatischen Steuern von Beleuchtungseinrichtungen**

(30) Priorität: 30.06.2003 DE 10329584
(71) Anmelder: ROBERT BOSCH GMBH, 70442 Stuttgart (DE)
(72) Erfinder: Hodapp, Bruno, 77855 Achern-Oensbach (DE); Meier, Hans, 77833 Ottersweier (DE); Blitzke, Henry, 77815 Buehl (DE); Schneider, Andreas, 90459 Nürnberg (DE)

(57) **Zusammenfassung**

Es wird eine Sensoreinrichtung (10) zum automatischen Steuern von Beleuchtungseinrichtungen (16), insbesondere für ein Kraftfahrzeug vorgeschlagen. Diese umfasst mindestens ein optisches Sensorelement (13), dass die Helligkeitsstrahlung in der Umgebung des Kraftfahrzeugs detektiert und eine Steuereinrichtung (15), die die Beleuchtungseinrichtungen (16) in Abhängigkeit der detektierten Helligkeitsstrahlung steuert. Weiterhin ist ein Filterelement 20 vorgesehen, dass die Helligkeitsstrahlung filtert. Erfindungsgemäß weist das Filterelement (20) einen ausschließlichen Durchlassbereich auf, der im Bereich des für das menschliche Auge sichtbaren Lichtes liegt.

## Beschreibung

### Stand der Technik

Die Erfindung betrifft eine Sensoreinrichtung zur automatischen Steuerung von Beleuchtungseinrichtungen, insbesondere für ein Kraftfahrzeug, nach dem Oberbegriff des Anspruchs 1.

Eine derartige Sensoreinrichtung ist bereits mit der DE-A-199 33 642 bekannt geworden und weist mehrere Sensorelemente auf, die die Helligkeitsstrahlung in der Umgebung des Kraftfahrzeugs detektieren. Die Signale dieser Sensorelemente werden an eine Steuereinrichtung vermittelt, die die Beleuchtungseinrichtungen in Abhängigkeit der detektierten Helligkeitsstrahlung steuert. Darüber hinaus weist dieser Sensor Filterelemente auf, die die Helligkeitsstrahlung filtern. Die Filter sind dabei so ausgelegt, dass Tages- und Kunstlicht voneinander unterschieden werden können.

### Vorteile der Erfindung

Die erfindungsgemäße Sensoreinrichtung mit den Merkmalen des Hauptanspruchs hat den Vorteil, dass durch die ausschließliche Detektion der Helligkeitsstrahlung im Bereich des für des menschliche Auge sichtbaren Lichts, ein optimales Steuerverhalten der Steuereinrichtung erzielt wird, das genau an das subjektive Helligkeitsempfinden des Fahrzeugführers angepaßt ist.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist hierbei, wenn das Sensorelement eine dem menschlichen Auge ähnliche spektrale Helligkeitsempfindlichkeit aufweist, da die subjektive Helligkeitsempfindlichkeit von der spektralen Verteilung der Umgebungshelligkeit abhängt.

Besonders kompakt ist die Sensoreinrichtung aufzubauen, wenn das Filterelement und das Sensorelement einstückig ausgebildet sind.

Besonders vorteilhaft ist es, wenn das Sensorelement als Halbleiterbauelement ausgebildet ist und das Filterelement als Schicht direkt auf dem Halbleiterbauelement angeordnet ist.

Durch das Anordnen des Sensorelementes auf einer Scheibe, insbesondere der Windschutzscheibe des Kraftfahrzeugs, wird vom Sensorelement derselbe Helligkeitseindruck wahrgenommen, der auch vom Fahrer des Kraftfahrzeugs wahrgenommen wird. Dadurch wird das Steuerverhalten der Steuereinrichtung vorteilhafterweise noch weiter verbessert.

Weiterhin ist als vorteilhaft anzusehen, wenn das Filterelement auf einer Scheibe, insbesondere der Windschutzscheibe des Kraftfahrzeugs angeordnet ist, da auf diese Weise Störstrahlungen auf das Sensorelement vermieden wird.

Besonders vorteilhaft ist es, wenn mehrere Sensorelement vorgesehen sind, die die Helligkeitsstrahlung aus verschiedenen Richtungen detektieren.

Hierbei ist es besonders vorteilhaft, wenn die Steuereinrichtung die Helligkeitsstrahlung aus verschiedenen Richtungen unterschiedlich bewertet.

### Zeichnungen

Ein Ausführungsbeispiel der Erfindung ist in den Figuren dargestellt und in der nachfolgenden Beschreibung näher erläutert. Es zeigen:
Figur 1, eine erfindungsgemäße Sensoreinrichtung in einer schematischen Querschnittsdarstellung und
Figur 2, ein Diagramm der spektralen Empfindlichkeit des menschlichen Auges.

### Beschreibung des Ausführungsbeispiels

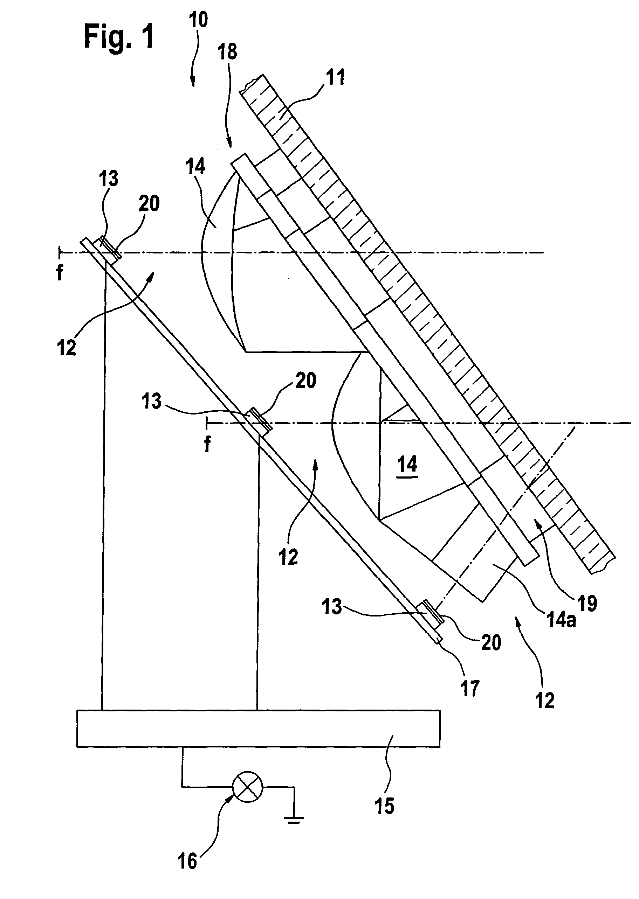

Figur 1 zeigt eine erfindungsgemäße Sensoreinrichtung 10, welche auf einer Scheibe 11, insbesondere einer Windschutzscheibe eines Kraftfahrzeugs aufgeklebt ist. Alternativ kann die Sensoreinrichtung 10 natürlich auch anders auf der Scheibe 11 befestigt sein, beispielsweise durch separate Befestigungselemente auf die Scheibe 11 gepresst sein.

Die Sensoreinrichtung 10 besteht aus mehreren Sensoren 12, wobei jeder Sensor 12 ein Sensorelement 13 und ein Lichtleitelement 14, 14a umfasst. Die Lichtleitelemente 14 und 14a sind zu einem gemeinsamen Lichtleitkörper 18 zusammenfasst und als einstückiges Spritzgussteil aus Kunststoff ausgebildet. Der Lichtleitkörper 18 besteht aus einer zumindest teilweise lichtdurchlässigen Platte, die zylindrische Ausformungen aufweist, welche mit linsenförmigen Rundungen abgeschlossen sind. Diese zylindrischen Ausformungen bilden mit den linsenförmigen Rundungen jeweils ein Lichtleitelement 14, 14a. Tritt paralleles Licht entlang der Mittelachse der zylindrischen Ausformungen durch die linsenförmigen Rundungen, ergibt sich ein Brennpunkt f, der eine Brennweite des Lichtleitelementes 14, 14a charakterisiert. Typischerweise ist die optische Achse an der Glas-Luft-Grenzfläche der Scheibe 11 gebrochen.

Die Sensorelemente 13 sind jeweils zwischen den Brennpunkten f der Lichtleitelemente 14 sowie den Lichtleitelementen 14 selbst angeordnet. Dadurch ergeben sich in Fahrtrichtung nach vorne gerichtete Lichterfassungskegel, welche leicht nach unten in Richtung der Straße gerichtet sind und eine Detektion der Umgebungshelligkeit in verschiedenen vorbestimmten Richtungen zulassen. Über den Abstand zwischen den Brennpunkten f des jeweils zugehörigen Lichtleitelements 14 und den lichtempfindlichen Sensorelementen 13, kann der Öffnungswinkel des Lichterfassungskegels eingestellt werden.

Eine Auswerteeinrichtung 15 steuert das Schalten einer Beleuchtungseinrichtung 16 in Abhängigkeit der Signale von den Sensorelementen 13. Die Sensorelemente 13 sind gemeinsam auf einer Platine 17 aufgebracht. Auf ihrer lichtempfindlichen Oberfläche tragen sie ein Filterelement 20, das innerhalb des Empfindlichkeitsbereichs des Sensorelementes 13 nur und ausschließlich der für das menschliche Auge sichtbare Wellenlängenbereich passieren läßt und alle anderen Bereiche absorbiert. Dieser liegt etwa zwischen 380 und 780 nm, vorzugsweise zwischen 400 und 750 nm. Neben dieser Richtungssensorik ist das Lichtleitelement 14a nicht in Fahrtrichtung nach vorne, sondern schräg nach oben ausgerichtet und weist einen sehr großen Öffnungswinkel auf, dass die globalen Lichtverhältnisse außerhalb des Fahrzeugs detektiert werden.

Ausschließlicher Durchlassbereich in diesem Zusammenhang heißt, dass der Sperrbereich des Filterelementes 20 sämtliche Bereich umfaßt, in denen das Sensorelement an sich empfindlich ist, mit Ausnahme des für das menschliche Auge sichtbaren Bereichs. Natürlich kann das Filterelement 20 weitere Durchlassbereiche aufweisen, die in Wellenlängen-Bereichen liegen, die ausserhalb der Empfindlichkeit des Sensorelementes 13 liegen.

Der Lichtleitkörper 18 ist auf die Scheibe 11 mittels eines Koppelelementes 19 angeklebt, welches in einer alternativen Ausführungsform auch als Filterelement 20 dienen kann. In einer weiteren alternativen Ausführungsform können auch die Lichtleitelemente 14 als Filterelemente ausgebildet werden. Vorzugsweise sind jedoch Filterschichten direkt auf die Sensorelemente 13aufgebracht.

Die Sensorelemente 13 sind hierbei weiterhin so ausgebildet, dass sie die spektrale Empfindlichkeit des menschlichen Auges berücksichtigen. Die Spektrale Empfindlichkeit des menschlichen Auges ist im grüngelben Bereich wesentlich höher, die Sensorelemente 13 sind daher im gelbgrünen Bereich wesentlichen empfindlicher als im roten oder im blauen Bereich.

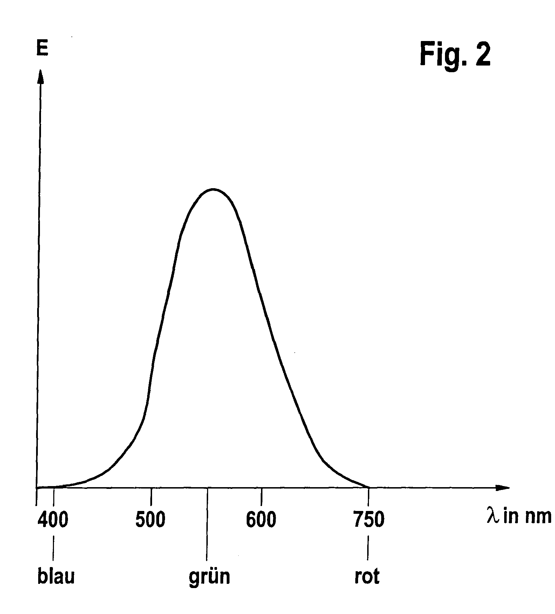

In Figur 2 ist die spektrale Empfindlichkeit des menschlichen Auges über der Wellenlänge aufgetragen. Zwischen 400 und 750 nm vermag das Auge und damit das Sensorelement 13 zu detektieren und weist im Bereich von 550 nm ein Maximum in der Empfindlichkeit auf.

## Patentansprüche

1. Sensoreinrichtung (10) zum automatischen Steuern von Beleuchtungseinrichtungen (16), insbesondere für ein Kraftfahrzeug, mit mindestens einem optischen Sensorelement (13), das die Helligkeitsstrahlung in der Umgebung des Kraftfahrzeugs detektiert in einer Steuereinrichtung (15), die die Beleuchtungseinrichtungen (16) in Abhängigkeit der detektierten Helligkeitsstrahlung steuert und mindestens ein Filterelement (20), das die Helligkeitsstrahlung filtert, **dadurch gekennzeichnet, dass** das Filterelement (20) einen ausschließlichen Durchlassbereich aufweist, der im Bereich das für das menschliche Auge sichtbaren Lichtes, insbesondere zwischen 380 nm und 780 nm, vorzugsweise zwischen 400 nm und 750 nm liegt.

2. Sensoreinrichtung (10), nach Anspruch 1, **dadurch gekennzeichnet, dass** das Sensorelement (13) eine dem menschlichen Auge ähnliche spektrale Helligkeitsempfindlichkeit aufweist.

3. Sensoreinrichtung (10) nach einem der vorhergehenden Ansprüche, **dadurch gekennzeichnet, dass** das Filterelement (20) und das Sensorelement (13) einstückig ausgebildet sind.

4. Sensoreinrichtung (10) nach einem der vorhergehenden Ansprüche, **dadurch gekennzeichnet, dass** das Sensorelement (13) als Halbleiterbauelement ausgebildet ist und das Filterelement (20) als Schicht direkt auf dem Halbleiterbauelement angeordnet ist.

5. Sensoreinrichtung (10) nach einem der vorhergehenden Ansprüche, **dadurch gekennzeichnet, dass** das mindestens eine Sensorelement (13) auf einer Scheibe, insbesondere der Windschutzscheibe (11) des Kraftfahrzeugs angeordnet ist.

6. Sensoreinrichtung (10) nach einem der vorhergehenden Ansprüche, **dadurch gekennzeichnet, dass** das Filterelement (20) auf einer Scheibe, insbesondere der Windschutzscheibe (11) des Kraftfahrzeugs angeordnet ist.

7. Sensoreinrichtung (10) nach einem der vorhergehenden Ansprüche, **dadurch gekennzeichnet, dass** mehrere Sensorelemente (13) vorgesehen sind, die Helligkeitsstrahlung aus verschiedenen Richtungen detektieren.

8. Sensoreinrichtung (10) nach Anspruch 7, **dadurch gekennzeichnet, dass** die Steuereinrichtung (15) die Helligkeitsstrahlung aus verschiedenen Richtungen unterschiedlich bewertet.
